# EUROPÄISCHE PATENTSCHRIFT

(11) **EP 1 998 064 B1**
(45) Veröffentlichungstag und Bekanntmachung des Hinweises auf die Patenterteilung: **29.01.2014**
(21) Anmeldenummer: 08008817.2
(22) Anmeldetag: 13.05.2008
(51) Int. Cl.: F16D 48/06

(54) **Verfahren zum Plausibilisieren der Stellung des Kupplungsaktors einer Kupplung, Verfahren zum Bestimmen des Tastpunktes einer Kupplung sowie Vorrichtung zum Durchführen der Verfahren**
Method for determining plausability of the position of a clutch, method and device for determining the clutch touch point
Procédé pour déterminer la plausibilité de la position d'un embrayage, procédé et dispositif pour déterminer le point de léchage d'un embrayage

(30) Priorität: 31.05.2007 DE 102007025412
(43) Veröffentlichungstag der Anmeldung: 03.12.2008
(73) Patentinhaber: Schaeffler Technologies AG & Co. KG, 91074 Herzogenaurach (DE)
(72) Erfinder: Eich, Jürgen, Dr., 77815 Bühl (DE); Reibold, Ekkehard, Dr., 77933 Lahr (DE); Nam Nguyen, Minh, Dr., 77815 Bühl (DE); Panzer, Matthias, 76137 Karlsruhe (DE)

(56) Entgegenhaltungen:
- EP-A1- 0 601 728
- WO-A1-01/30602

## Beschreibung

Die Erfindung betrifft ein Verfahren mit den Merkmalen gemäß dem Oberbegriff des Anspruchs 1. Zusätzlich betrifft die Erfindung eine Vorrichtung zum Durchführen des Verfahrens.

Die internationale Offenlegungsschrift WO01/30602A1 Offenbart ein Verfahrne zum Plausibilisieren einer Betätigungsstellung einer von einem Aktor betätigten Kupplung eines Doppelkupplungsgetriebes.

In modernen Kraftfahrzeugen werden zunehmend automatisierte, d.h. von einem Aktor betätigte Kupplungen eingesetzt. Die Stellung eines Betätigungsgliedes der Kupplung bzw. des Aktors wird dabei meistens mit Hilfe eines Inkrementzählers erfasst, der unmittelbar nur Informationen über gerade zurückgelegte Stellwege liefert, jedoch keine Informationen über die Absolutstellung des Betätigungsgliedes. Um die Absolutstellung herauszufinden, ist eine Referenzierung erforderlich, bei der eine vorbestimmte Betätigungsstellung der Kupplung von dem Aktor angefahren wird und der jeweilige Zählstand des Inkrementzählers ausgelesen wird.

Ein grundlegendes Problem solcher Inkrementalwegmessungen ist ihre Abhängigkeit von der genauen Ermittlung der Referenzstellung. Dieses Problem verschärft sich dadurch, dass bei Fahrzeugbetrieb grundsätzlich mit dem Eintreten von Fehlerereignissen gerechnet werden muss, die dazu führen können, dass die Absolutstellung des Kupplungsaktors bzw. des Betätigungsgliedes der Kupplung und damit auch das durch den Aktor eingestellte Kupplungsmoment in der elektronischen Steuereinrichtung nicht mehr bekannt sind. Daraus können sicherheitskritische Ereignisse resultieren, beispielsweise ein Anfahren ohne Fahrwunsch. Besonders sicherheitskritisch ist eine genaue Kenntnis der jeweiligen Betätigungsstellung der Kupplung bei einem Doppelkupplungsgetriebe, bei dem zwei Kupplungen in genau zueinander koordinierter Weise betätigt werden müssen.

Der Erfindung liegt die Aufgabe zugrunde, Möglichkeiten anzugeben, wie die Sicherheit der Kupplungsbetätigung verbessert werden kann.

Eine erste Lösung dieser Aufgabe wird mit einem Verfahren gemäß dem Anspruch 1 erzielt. Mit diesem Verfahren kann sicher erkannt werden, ob eine jeweilige der Kupplungen des Doppelkupplungsgetriebes tatsächlich geöffnet ist, wenn sie von einer Steuereinrichtung des Doppelkupplungsgetriebes in den Offenzustand gesteuert werden sollte.

Die Unteransprüche 2 bis 9 sind auf vorteilhafte Weiterbildungen des erfindungsgemäßen Verfahrens gerichtet, wobei mit den Merkmalen der Ansprüche 3 bis 5 zusätzlich der Tastpunkt einer jeweiligen der Kupplungen eines Doppelkupplungsgetriebes ermittelt werden kann.

Der Anspruch 10 kennzeichnet den grundsätzlichen Aufbau einer Vorrichtung zum Durchführen der vorgenannten Verfahren.

Ein Verfahren zum Plausibilisieren einer Betätigungsstellung einer von einem Aktor betätigten Kupplung enthält folgende Schritte:
- Öffnen der dem gerade aktiven, alten Teilgetriebe zugeordneten Kupplung und gleichzeitiges Schließen der dem anderen Teitgetriebe zugeordneten Kupplung zum Umschalten von dem im alten Teilgetriebe eingelegten Gang auf einen in dem anderen, neuen Teilgetriebe eingelegten Gang,
- Auslegen des im alten Teilgetriebe eingelegten Ganges noch während des sich überschneidenden Betriebs der Kupplungen oder unmittelbar danach,
- Erfassen der Differenz zwischen der Drehzahl einer von einem Antriebsmotor drehangetriebenen Antriebswelle des Doppelkupplungsgetriebes und der Drehzahl der Eingangswelle des alten Teilgetriebes, und
- Bewerten des Zustandes der dem alten Teilgetriebe zugeordneten Kupplung als geöffnet, wenn die Drehzahldifferenz innerhalb eines vorbestimmten Zeitraums nach dem Auslegen des Ganges einen vorbestimmten Wert übersteigt.

Vorteilhafterweise wird bei geschlossener, dem neuen Teilgetriebe zugeordneter Kupplung im alten Teilgetriebe ein neuer Gang eingelegt und die Einlegbarkeit des neuen Gangs als Öffnungszustand der dem alten Teilgetriebe zugeordneten Kupplung gewertet.

Bei einer bevorzugten Durchführungsform des erfindungsgemäßen Verfahrens wird das Verhältnis der Drehzahl der Antriebswelle des Doppelkupplungsgetriebes zu der der Eingangswelle des neuen Teilgetriebes erfasst und aus dem Verhältnis auf den Öffnungszustand der dem alten Teilgetriebe zugeordneten Kupplung und/oder den Schließzustand der dem neuen Getriebe zugeordneten Kupplung geschlossen.

Die dem alten Teilgetriebe zugeordnete Kupplung wird nach deren Öffnung bei ausgelegtem Gang im alten Teilgetriebe allmählich geschlossen, der Drehzahlverlauf der Eingangswelle des alten Teilgetriebes erfasst und die Betätigungsstellung der Kupplung, bei der eine rasche Änderung der Drehzahl erfolgt, als Tastpunkt bestimmt.

In Weiterbildung des vorgenannten Verfahrens wird in dem alten Teilgetriebe bei offener zugehöriger Kupplung ein längerer Gang als der im neuen Teilgetriebe eingelegte Gang eingelegt und der längere Gang kurzzeitig derart ansynchronisiert, dass die Drehzahl der Eingangswelle des alten Teilgetriebes unter die der Antriebswelle sinkt, so dass die Eingangswelle des alten Teilgetriebes zu Beginn des allmählichen Schließens der ihm zugeordneten Kupplung mit einer niedrigeren Drehzahl dreht als die Antriebswelle.

Ebenfalls kann vor Beginn des allmählichen Schließens die Drehzahl der Antriebswelle derart erhöht werden, dass sich die Antriebswelle bei Beginn des allmählichen Schließens der dem alten Teilgetriebe zugeordneten Kupplung mit einer höheren Drehzahl dreht als die Eingangswelle des alten Teilgetriebes.

Die Drehzahl der Antriebswelle kann dabei während ihrer Erhöhung mit der Eingangswelle des alten Teilgetriebes verglichen werden und eine gleichsinnige Änderung der Drehzahlen als nicht geöffneter Zustand der im alten Teilgetriebe zugeordneten Kupplung gewertet werden.

Bei einer weiteren vorteilhaften Durchführungsform des erfindungsgemäßen Verfahrens wird die dem alten Getriebe zugeordnete Kupplung bei im Neutralgang befindlichen alten Teilgetriebe zumindest teilweise derart geschlossen, dass sich die Eingangswelle des alten Teilgetriebes dreht, die Kupplung geöffnet wird, die Drehzahl der Eingangswelle erfasst wird, die Kupplung allmählich geschlossen wird und diejenige Betätigungsstellung der Kupplung als Tastpunkt bestimmt wird, bei der sich der zeitliche Gradient der Drehzahl der Eingangswelle während des allmählichen Schließens der Kupplung in vorbestimmter Weise ändert.

Ein Verfahren zum Bestimmen des Tastpunktes einer von einem Aktor betätigten Kupplung, welche Kupplung zwischen einer von einem Antriebsmotor antreibbaren Antriebswelle und einer Eingangswelle eines Getriebes angeordnet ist, enthält folgende Schritte:
- allmähliches Schließen der Kupplung bei im Neutralgang befindlichen Getriebe und drehangetriebener Antriebswelle,
- Erfassen der Drehzahl der Eingangswelle und
- Bestimmen derjenigen Betätigungsstellung der Kupplung als Tastpunkt, bei der sich die Drehzahl der Eingangswelle in vorbestimmter Weise ändert.

Vorteilhafterweise wird die Kupplung bei im Neutralgang befindlichen Getriebe zumindest teilweise derart geschlossen, dass sich die Eingangswelle dreht, die Kupplung geöffnet, die Drehzahl der Eingangswelle erfasst, die Kupplung allmählich geschlossen und diejenige Betätigungsstellung der Kupplung als Tastpunkt bestimmt, bei der sich der zeitliche Gradient der Drehzahl der Eingangswelle während des allmählichen Schließens der Kupplung in vorbestimmter Weise ändert.

Eine Vorrichtung zum Steuern des Aktors zum Betätigen einer Kupplung, die zwischen einer von einem Antriebsmotor antreibbaren Antriebswelle und einer Eingangswelle eines Getriebes angeordnet ist, enthält Sensoren zum Erfassen der Drehzahl der Antriebswelle und der Eingangswelle und eine mit den Sensoren verbundene elektronische Steuereinrichtung, die den Aktor entsprechend einem Verfahren nach einem der vorgenannten Ansprüche steuert.

Die Erfindung wird im Folgenden anhand schematischer Zeichnungen beispielsweise und mit weiteren Einzelheiten erläutert.

In den Figuren stellen dar:
Figur 1 ein Blockschaltbild eines in seinem Aufbau an sich bekannten Doppelkupplungsgetriebes mit zugehöriger elektronischer Steuereinrichtung;
Figuren 2 bis 6 Zeitdiagramme zur Erläuterung verschiedener Durchführungsformen er- findungsgemäßer Verfahren.

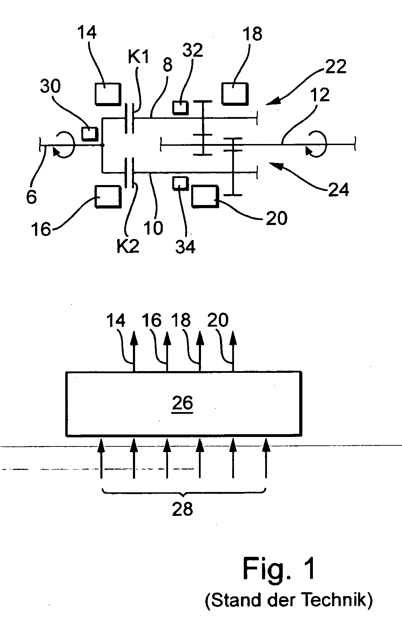

Gemäß Figur 1 weist ein an sich bekanntes Doppelkupplungs- bzw. Parallelschaltgetriebe eine beispielsweise von einer Brennkraftmaschine angetriebene Antriebswelle 6 auf, die wahlweise mit zwei Eingangswellen 8 und 10 drehfest verbindbar ist. Der Drehmomentfluss von der Antriebswelle 6 in die Eingangswellen 8 und 10 ist über je eine Kupplung K1 und K2 wahlweise steuerbar. Zwischen der Eingangswelle 8 und einer Ausgangswelle 12 sind über Radpaarungen, von denen nur eine dargestellt ist, verschiedene Übersetzungen schaltbar. Ebenso sind zwischen der Eingangswelle 10 und der Ausgangswelle 12 verschiedene Radpaarungen schaltbar, von denen nur eine dargestellt ist. Zum Betätigen der Kupplungen K1 und K2 sind Aktoren 14 und 16 vorgesehen. Zum Schalten der Radpaarungen, beispielsweise zum Herstellen einer drehfesten Verbindung zwischen dem auf der Eingangswelle 8 oder 10 angeordneten Rad mit der jeweiligen Eingangswelle 8 oder 10, das mit einem jeweiligen, mit der Ausgangswelle 12 ständig drehfest verbundenen Rad kämmt, sind Aktoren 18 und 20 vorgesehen, die beispielsweise jeder einen Schaltaktor und einen Wählaktor enthalten können. Insgesamt bilden die Eingangswelle 8 und die Ausgangswelle 12 sowie die Eingangswelle 10 und die Ausgangswelle 12 je ein Teilgetriebe 22 bzw. 24 des Doppelkupplungsgetriebes.

Zur Ansteuerung der Aktoren 14, 16, 18 und 20 dient eine elektronische Steuereinrichtung 26 mit Mikroprozessor und zugehörigen Programm- und Datenspeichern, deren Ausgänge jeweils einen der Aktoren ansteuern und deren Eingänge 28 mit Sensoren 30, 32 bzw. 34 verbunden sind, die die Drehzahl der Antriebswelle 6, der Eingangswelle 8 und der Eingangswelle 10 erfassen, sowie weiteren Sensoren zur Erfassung von Betriebsparametern des Fahrzeugantriebsstrangs, beispielsweise einem Sensor zur Erfassung der Drehzahl der angetriebenen Fahrzeugräder, einem Sensor zur Erfassung der Stellung eines Getriebewählhebels, einem Sensor zur Erfassung der Stellung eines Fahrpedals usw. Die dargestellte Steuereinrichtung 26 kann über ein Bus-System mit weiteren Steuergeräten des Fahrzeugs verbunden sein, beispielsweise einem Motorsteuergerät, mit dem ein Leistungsstellglied des Motors gesteuert wird. Die Aktoren können beispielsweise als Hebelaktoren gestaltet sein, die beispielsweise elektromotorisch angesteuert werden, wobei die Umdrehung jedes Elektromotors von einem Inkrementzähler (nicht dargestellt) erfasst wird.

Für die Funktion einer Kupplung ist das jeweils von der Kupplung übertragbare Moment wichtig und ist in einem Speicher der Steuereinrichtung 26 als Kurve abgelegt, die das übertragbare Kupplungsmoment abhängig von der Stellung eines Kupplungsstellgliedes, beispielsweise eines Kupplungshebels, angibt. Bei einer Änderung des Funktionszustandes der Kupplung durch Verschleiß und Ähnliches muss die Kennlinie aktualisiert werden, was durch Adaptionsverfahren erfolgt, wozu beispielsweise der Tastpunkt der Kupplung im Fahrbetrieb überprüft und an sich gegebenenfalls ergebende Veränderungen der Kupplungseigenschaften angepasst werden muss.

Bei dem in Figur 1 dargestellten Doppelkupplungsgetriebe kann in dem jeweiligen Teilgetriebe 22 oder 24, dessen Kupplung offen ist, jeweils ein Gang eingelegt werden, während die wirksame Übersetzung des Getriebes durch dasjenige (aktive) Teilgetriebe bestimmt wird, dessen Kupplung geschlossen ist. Wenn im Teilgetriebe 22 beispielsweise ein Gang eingelegt ist und die Kupplung K1 geschlossen ist, dann ist dieser Gang für die Übersetzung zwischen der Antriebswelle 6 und der Ausgangswelle 12 wirksam. Gleichzeitig kann in dem anderen Teilgetriebe 24 ein neu zu schaltender Gang eingelegt werden. Beim Schalten des Getriebes von dem aktuell eingelegten Gang in den neu eingelegten Gang muss die Kupplung K1 geöffnet und, für eine zugkraftunterbrechungsfreie Verbindung zwischen der Antriebswelle 6 und der Ausgangswelle 12, die Kupplung K2 überschneidend geschlossen werden. Wenn die Kupplung K2 die Drehmomentübertragung übernimmt, würde, wenn nicht zumindest eine der Kupplungen K1, K2 gleichzeitig rutscht, das Getriebe durch Überbestimmung der Übersetzungen zerstört. Daher wird zumindest zeitweise, wenn beide Kupplungen K1, K2 gleichzeitig über ihren Tastpunkt hinaus geschlossen sind, wobei als Tastpunkt derjenige Punkt definiert ist, ab dem die Kupplung bei zunehmendem Schließen Drehmoment überträgt (im Tastpunkt wird ein Drehmoment von allenfalls wenigen Newtonmetern übertragen) ein schlupfender Zustand hergestellt, bei dem wenigstens eine der beiden Kupplungen K1, K2 schlupft.

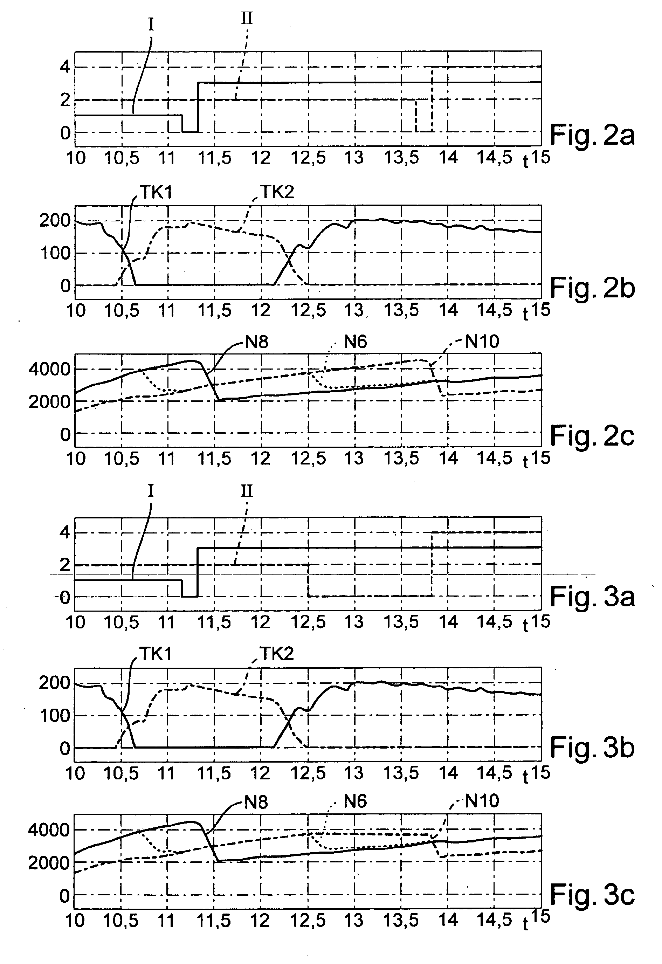

Anhand der Figur 2 wird im Folgenden ein herkömmlicher Schaltablauf eines Doppelkupplungsgetriebes erläutert, wobei die Abszisse jeweils die Zeit, beispielsweise in Sekunden dargestellt. Im Diagramm a) gibt die Kurve I den Schaltzustand eines der Teilgetriebe, beispielsweise des Teilgetriebes 22 an, und die Kurve 11 den Schaltzustand des anderen Teilgetriebes, beispielsweise des Teilgetriebes 24 an.

In dem Diagramm b), in dem die Ordinate ein übertragbares Drehmoment angibt, bezeichnet die Kurve TK1 das von der Kupplung K1 übertragbare Drehmoment und die Kurve TK2 das von der Kupplung K2 übertragbare Drehmoment.

In dem Diagramm c), in dem die Ordinate eine Drehzahl angibt, bezeichnet die Kurve N6 die Drehzahl der Antriebswelle 6, die beispielsweise gleich der Drehzahl der Kurbelwelle einer Brennkraftmaschine ist, die Kurve N8 bezeichnet die Drehzahl der Eingangswelle 8 und die Kurven N10 bezeichnet die Drehzahl der Eingangswelle 10.

Anhand der Diagramme der Figur 2 wird eine Schaltung vom zweiten Gang in den dritten Gang mit anschließender Vorwählschaltung vom zweiten in den vierten Gang erläutert, wobei der Zeitablauf zwischen t=12 Sekunden und t=14,5 Sekunden erläutert wird.

Zum Zeitpunkt t=12 Sekunden ist im ersten Teilgetriebe 22 der dritte Gang eingelegt und ist im zweiten Teilgetriebe 24 der zweite Gang eingelegt. Das Motormoment wird zu diesem Zeitpunkt über das zweite Teilgetriebe 24 geleitet, was daran erkennbar ist, dass das Kupplungsmoment entsprechend der Kurve TK2 größer 0 ist.

Zum Zeitpunkt t=12 Sekunden beginnt ein Schaltvorgang, wobei zwischen t=12 Sekunden und t=12,5 Sekunden das Kupplungsmoment der Kupplung K2 auf 0 abnimmt und überschneidend das Kupplungsmoment der Kupplung K1 zunimmt. Ab t=12,5 Sekunden wird das Motormoment über die Kupplung K1 und das Teilgetriebe 22 geführt, so dass im dritten Gang gefahren wird. Zwischen dem Zeitpunkt t=12,5 Sekunden und dem Zeitpunkt t=13 Sekunden werden die Motordrehzahl N6 und die Drehzahl N8 der Eingangswelle 8 des ersten Teilgetriebes 22 synchronisiert.

Zwischen t=13,5 Sekunden und t=14 Sekunden erfolgt im zweiten Teilgetriebe 24 eine Vorwahlschaltung in den vierten Gang, damit später ohne Zugkraftunterbrechung in diesen Gang weitergeschaltet werden kann.

Im Folgenden wird anhand der Figur 3, die der Figur 2 entsprechende Kurven darstellt, ein erfindungsgemäßer Schaltablauf erläutert, wobei alle Betätigungen fehlerfrei erfolgen, d.h. in der Steuereinrichtung 26 die jeweiligen Kupplungspositionen nach Referenzierungen einwandfrei abgelegt sind, so dass sie korrekt angesteuert werden können.

Im Unterschied zu dem Ablauf gemäß Figur 2 wird bei dem Ablauf gemäß Figur 3 der Gang des vor der Schaltung aktiven Teilgetriebes (gemäß der Bezeichnung der Ansprüche altes Teilgetriebe) erheblich früher ausgelegt, beispielsweise unmittelbar am Ende der Überschneidung der Kupplungsbetätigung oder unmittelbar danach, bereits zum Zeitpunkt t=12,5 Sekunden. Dies geschieht dadurch, dass der betroffene Schaltaktor leicht vorgespannt wird oder unmittelbar nach Beendigung der Betätigungen der Kupplungen, vorzugsweise wenn die Kupplung K2 gerade ihre Offenstellung erreicht haben sollte, ausgelegt wird. Während nach dem konventionellen, in Figur 2 dargestellten Schaltablauf die Drehzahl N10 des alten Teilgetriebes im Zeitbereich von t=12,5 Sekunden bis t=13,8 Sekunden durch die Fahrzeuggeschwindigkeit und den bislang eingelegten Gang bestimmt wurde, wird durch das frühzeitige Auslegen des Ganges im alten Teilgetriebe erreicht, dass dessen Drehzahl vom Kupplungsmoment sowie gegebenenfalls Schleppmomenten bestimmt wird. Unter der Voraussetzung von kleinen Schleppmomenten wird daher eine Prüfung ermöglicht, ob die Kupplung des alten Teilgetriebes tatsächlich geöffnet wurde. Wenn im Beispiel von Figur 3 die Kupplung K2 zum Zeitpunkt t=12,5 Sekunden tatsächlich geöffnet ist, wird sich unter Voraussetzung von kleinen Schleppmomenten im Getriebe eine Differenz zwischen der Drehzahl der Antriebswelle 6 (N6) und der Drehzahl der Eingangswelle 10 des nunmehr im Neutralgang befindlichen zweiten Teilgetriebes 24 einstellen. Somit kann durch Erfassen des zeitlichen Verlaufes der Drehzahl der Eingangswelle 10 unmittelbar nach dem Auslegen des Gangs im zweiten Teilgetriebe (Drehzahl bleibt bei geöffneter Kupplung konstant) bzw. gegebenenfalls zusätzlicher Erfassung der Drehzahl der Antriebswelle 6 (Differenz zwischen Drehzahl der Antriebswelle 6 und der Eingangswelle 10 entspricht dem Abfall der Drehzahl der Eingangswelle 6) entschieden werden, ob die Kupplung K2 tatsächlich offen ist.

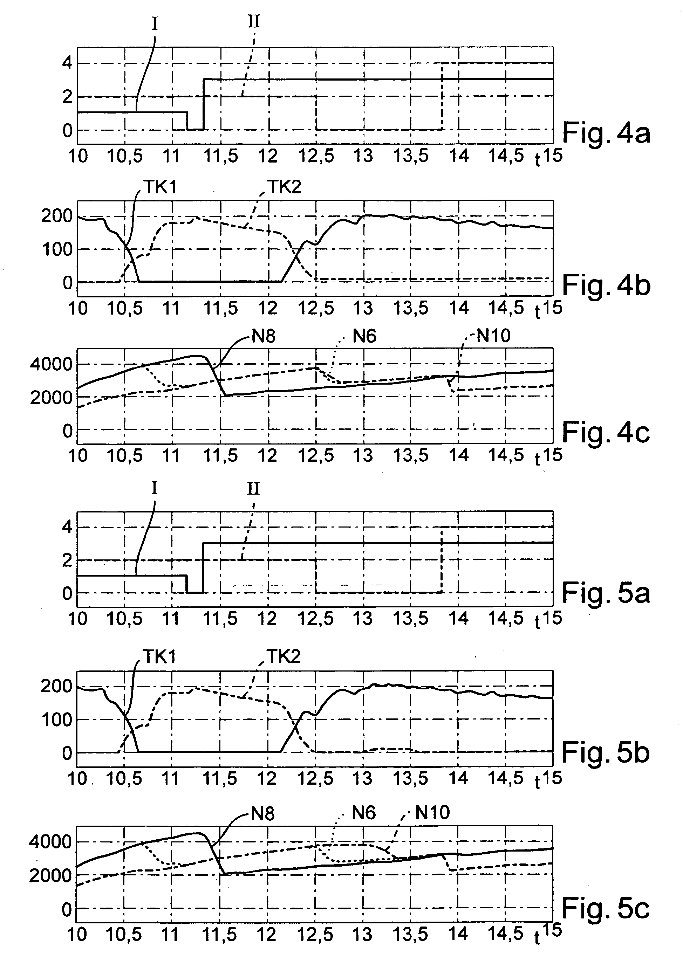

Figur 4 stellt die Verhältnisse der Figur 3 für den Fall dar, dass die Kupplung TK2 zwar wiederum so angesteuert wird, dass sie öffnen sollte, jedoch tatsächlich nicht öffnet. Wie aus den Kurven N6 und N10 ersichtlich, folgt in diesem Fall die Drehzahl der Eingangswelle 10 des zweiten Teilgetriebes der Drehzahl der Antriebswelle 6, ohne dass es, weil im zweiten Teilgetriebe 24 kein Gang eingelegt ist, zu Problemen kommt. Die Fehlfunktion der Kupplung K2 wird jedoch sofort dadurch erkannt, dass kein Drehzahlunterschied zwischen den Drehzahlen der Wellen 6 und 10 vorhanden ist. In Folge des frühzeitigen Erkennens der Fehlfunktion der Betätigung der Kupplung K2 können Absicherungs- oder Fehlerbeseitigungsmaßnahmen ergriffen werden, bevor es zu gefährlichen Betriebszuständen kommt.

Die vorgenannte Vorgehensweise ermöglicht zwar die Erkennung einer Fehlfunktion in der Betätigung der zweiten Kupplung K2, sie liefert jedoch keine Hinweise darauf, ob die in der Steuereinrichtung 26 gespeicherte Absolutposition des Kupplungsaktors korrekt ist. Wie zusätzlich die Absolutposition eines Betätigungsgliedes der Kupplung oder der beispielsweise von einem Inkrementzähler erfassten Stellung des zugehörigen Kupplungsaktors erfasst werden kann, ist anhand der Figur 5 erläutert. Die Vorgänge der Figur 5 entsprechen denen der Figur 3, mit denen sie bis zum Zeitpunkt t=13 Sekunden identisch sind. In Abänderung der Steuerung gemäß Figur 3 wird bei der Steuerung gemäß Figur 5 die Kupplung K2 des "alten" zweiten Teilgetriebes 24 ab dem Zeitpunkt t=13 Sekunden mit mäßiger Rampengeschwindigkeit allmählich geschlossen. Während dieses allmählichen Schließens wird das Drehzahlsignal des Drehzahlsensors 34 überwacht. Sobald sich diese Drehzahl signifikant in Richtung der Drehzahl der Antriebswelle 6 verändert, ist dies ein Zeichen dafür, dass die Kupplung K2 Moment überträgt, d.h. in den Bereich des Tastpunktes bewegt wurde. Die plötzliche Abnahme der Drehzahl der Eingangswelle 10 (Kurve N10) beim Anstieg des Kupplungsmoments der Kupplung K2 (Zeitpunkt etwa 13,2 Sekunden) kann als Tastpunkt der Kupplung K2 gewertet werden oder kann zusätzlich mit dem in der Steuereinrichtung 26 gespeicherten Tastpunkt verglichen werden, wobei durch einen positiven Vergleich darauf geschlossen werden kann, dass der gespeicherte Tastpunkt noch gültig ist. Es können unterschiedliche Auswertealgorithmen zur Auswertung der Drehzahl der Eingangswelle 10 verwendet werden, beispielsweise die plötzliche Änderung der Drehzahl der Eingangswelle 10 oder das Unterschreiten einer Differenz zwischen der Drehzahl der Eingangswelle 10 und der Antriebswelle 6.

Es versteht sich, dass die vorgenannten Verfahren zur Plausibilisierung der Kupplungsbetätigung und/oder zur Feststellung des Tastpunktes je nach erfolgter Schaltung sowohl für das Teilgetriebe 22 als auch für das Teilgetriebe 24 angewendet werden können.

Bei der Ermittlung des Tastpunktes, wie anhand Figur 5 beschrieben, hat es sich als vorteilhaft herausgestellt, wenn die Welle, deren Drehzahl sich beim Betätigen der zugehörigen Kupplung ändern soll, beim allmählichen Schließen der Kupplung nicht wie in Figur 5 dargestellt zu kleineren Drehzahlen verzögert, sondern zu höheren Drehzahlen hin beschleunigt wird. Dadurch lassen sich störende Einflüsse von Schleppmomenten im Getriebe auf die oben beschriebene Drehzahlauswertung minimieren. Um die Eingangswelle eines Teilgetriebes durch die Kupplungsbetätigung beschleunigen zu können, muss sich diese Eingangswelle des Teilgetriebe langsamer drehen als die Antriebswelle des Getriebes (d.h. N8 < N6 bzw. N10 < N6 muss erreicht werden). Eine Möglichkeit, die Drehzahl beispielsweise der Eingangswelle 10 zu vermindern, liegt darin, dass in dem nicht aktiven Teilgetriebe bei zunächst offener Kupplung ein Gang eingelegt wird, der bei voller Synchronisation zu einer Drehzahl der Eingangswelle 10 führen würde, die unter der Drehzahl der Antriebswelle 6 liegt. Bevor das anhand der Figur 5 geschilderte Verfahren durchgeführt wird, kann zu diesem Zweck der jeweilige zunächst eingelegt Gang leicht ansynchronisiert werden, so dass die Drehzahl der Eingangswelle 10 auf einen Wert gebracht wird, der gleich der Drehzahl der Ausgangswelle dividiert durch die Übersetzung ist. Beim Ansynchronisieren des Ganges wird die Drehzahl der Welle 10 dann auf eine entsprechend unter der Drehzahl der Antriebswelle 6 liegende Drehzahl gebracht. Anschließend wird der Gang ausgelegt und die Kupplung K2 allmählich etwas geschlossen, wie anhand der Figur 5 dargestellt. Die Erfassung der Drehzahl der Eingangswelle 10 geschieht dann nicht, wie in Figur 5c) dargestellt, bei abnehmender Drehzahl, sondern bei zunehmender Drehzahl.

Eine andere Möglichkeit zu gewährleisten, dass beim allmählichen Schließen der Kupplung um einen geringfügigen Betrag die zugehörige Eingangswelle beschleunigt wird, besteht darin, dass die Motordrehzahl bzw. die Drehzahl der Antriebswelle 6 bei entsprechend schlupfender Kupplung des aktiven Getriebes erhöht wird, so dass die Bestimmung des Tastpunktes, wie vorstehend beschrieben, bei beschleunigter Welle erfolgen kann.

Die Erhöhung der Drehzahl der Antriebswelle 6 mittels eines Eingriffs in den Antriebsmotor kann zusätzlich zur Plausibilisierung der Stellung der Kupplung verwendet werden, die bei Erhöhung der Drehzahl der Antriebswelle 6 an sich offen sein sollte. Wenn nämlich die der offenen Kupplung zugehörige Eingangswelle sich entsprechend der Zunahme der Antriebswelle schneller dreht, ist dies ein Zeichen dafür, dass die Kupplung nicht geöffnet ist, so dass ein Fehler in der Kupplungsbetätigung erkannt wird.

Ein Problem der vorstehend erläuterten Verfahren, den Tastpunkt einer Kupplung dadurch zu erkennen, dass die Drehzahländerung der zugehörigen Welle erfasst wird, besteht darin, dass der so erkannte Tastpunkt von einem unbekannten, auf die jeweilige Welle wirkenden Schleppmoment abhängt. Um den Einfluss unbekannter Schleppmomente zu kompensieren, kann die jeweilige Eingangswelle vor der eigentlichen Tastpunktbestimmung in Drehung versetzt werden. Bei vollständig geöffneter Kupplung wird dann der Einfluss der Schleppmomente bestimmt. Zur Tastpunktbestimmung wird schließlich eine Änderung der Drehzahl der jeweiligen Eingangswelle während eines langsamen, allmählichen Schließens der Kupplung herangezogen.

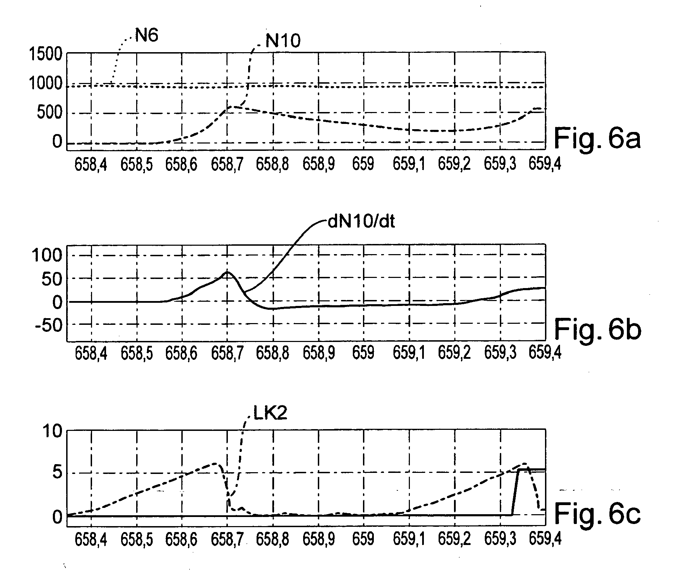

Das Verfahren wird anhand der Figur 6 erläutert.

In den Diagrammen der Figur 6 ist auf der Abszisse die Zeit in Sekunden dargestellt, die Ordinate des Diagramms a) gibt eine Drehzahl in U/min an, die Ordinate des Diagramms b) gibt einen zeitlichen Gradienten einer Drehzahl an, die Ordinate des Diagramms c) gibt den Verfahrweg eines Aktors zur Kupplungsbetätigung an. Die Kurve N6 bezeichnet die Drehzahl der Antriebswelle 6. Die Kurve N10 bezeichnet die Drehzahl der Getriebeeingangswelle 10. Die Kurve dN10/dt bezeichnet die zeitliche Änderung der Drehzahl der Eingangswelle 10. Die Kurve LK2 bezeichnet den an der Kupplung 2 eingestellten Verfahrweg.

Sei in einem geschilderten Fall angenommen, im zweiten Teilgetriebe 24 sei der Neutralgang eingelegt, die Kupplung K2 sei voll geöffnet und die Eingangswelle 10 stehe. Die Brennkraftmaschine läuft mit Leerlaufdrehzahl, mit der sich die Antriebswelle 6 dreht.

Um den Einfluss von Schleppverlusten zu minimieren, wird zunächst die Getriebeeingangswelle 10 in Drehung versetzt, indem durch langsames Schließen der Kupplung (Kurve LK2) die Eingangswelle 10 drehangetrieben wird. Sobald eine definierte Mindestdrehzahl erreicht ist, im dargestellten Beispiel etwa 500 U/min, wird die Kupplung K2 im dargestellten Beispiel zum Zeitpunkt 658,68 wieder vollständig geöffnet. Nach dem Öffnen der Kupplung wird der Gradient der Drehzahl der Eingangswelle 10 dN10/dt für kurze Zeit ermittelt und ausgewertet. Dadurch kann die Wirkung des unbekannten Schleppmoments auf die Dynamik der Eingangswelle 10 festgestellt werden.

Für die anschließende eigentliche Tastpunktermittlung wird dann die Kupplung K2 wieder weggesteuert mit einer geeigneten Rampengeschwindigkeit, beispielsweise wie dargestellt, etwa ab dem Zeitpunkt 659,1 geschlossen. Dabei wird der Gradient der Drehzahl der Eingangswelle 10 wiederum ermittelt. Sobald sich dieser Gradient im Vergleich zur Phase mit offener Kupplung um einen definierten Wert ändert, kann auf das Erreichen der Tastpunktposition geschlossen werden. Im dargestellten Fall ist dies etwa zum Zeitpunkt t=659,33 der Fall. Die zu diesem Zeitpunkt erreichte Kupplungsposition kann als Tastpunktposition übernommen werden.

Neben der geschilderten rein experimentellen Festlegung des Tastpunktes kann auch die Bewegungsgleichung und das Momentengleichgewicht an der Eingangswelle 10 berechnet und ein analytischer Zusammenhang zwischen der Gradientenänderung und dem Tastmoment hergeleitet werden.

Das vorgenannte Verfahren muss nicht zwingend in einem Zustand eingesetzt werden, in dem die Getriebeeingangswelle 10 steht, was beispielsweise bei stehendem Fahrzeug der Fall ist, sondern kann auch bei fahrendem Fahrzeug eingesetzt werden, bei dem die Getriebeeingangswelle nicht vollständig zum Stillstand kommt. Hier lässt sich durch die Auswertung des Drahzahlgradienten an der Eingangswelle des (Teil-)Getriebes der Einfluss von störenden Schleppmomenten ebenfalls kompensieren.

Das Vorstehende und weitere geschilderte Verfahren können nicht nur für die Kupplungen von Doppelkupplungsgetrieben eingesetzt werden, sondern auch, insbesondere soweit es um die Tastpunktermittlung geht, bei herkömmlichen Schaltgetrieben, die nur mit einer Kupplung betätigt werden.

### Bezugszeichenliste

- 6: Antriebswelle
- 8: Eingangswelle
- 10: Eingangswelle
- 12: Ausgangswelle
- 14: Aktor
- 16: Aktor
- 18: Aktor
- 20: Aktor
- 22: Teilgetriebe
- 24: Teilgetriebe
- 26: Steuereinrichtung
- 28: Eingänge
- 30: Sensor
- 32: Sensor
- 34: Sensor
- K1: Kupplung
- K2: Kupplung

## Patentansprüche

1. Verfahren zum Plausibilisieren einer Betätigungsstellung einer von einem Aktor betätigten Kupplung eines Doppelkupplungsgetriebes, enthaltend folgende Schritte:
- Öffnen der dem gerade aktiven, alten Teilgetriebe zugeordneten Kupplung und gleichzeitiges Schließen der dem anderen Teilgetriebe zugeordneten Kupplung zum Umschalten von dem im alten Teilgetriebe eingelegten Gang auf einen in dem anderen, neuen Teilgetriebe eingelegten Gang,
- Auslegen des im alten Teilgetriebe eingelegten Ganges noch während des sich überschneidenden Betriebs der Kupplungen oder unmittelbar danach,
- Erfassen der Differenz zwischen der Drehzahl einer von einem Antriebsmotor drehangetriebenen Antriebswelle des Doppelkupplungsgetriebes und der Drehzahl der Eingangswelle des alten Teilgetriebes, und
- Bewerten des Zustandes der dem alten Teilgetriebe zugeordneten Kupplung als geöffnet, wenn die Drehzahldifferenz innerhalb eines vorbestimmten Zeitraums nach dem Auslegen des Ganges einen vorbestimmten Wert übersteigt, **dadurch gekennzeichnet, dass** das Verhältnis der Drehzahl der Antriebswelle des Doppelkupplungsgetriebes zu der der Eingangswelle des alten Teilgetriebes erfasst wird und aus dem Verhältnis auf den Öffnungszustand der dem alten Teilgetriebe zugeordneten Kupplung geschlossen wird.

2. Verfahren nach Anspruch 1, wobei bei geschlossener, dem neuen Teilgetriebe zugeordneter Kupplung im alten Teilgetriebe ein neuer Gang eingelegt wird und die Einlegbarkeit des neuen Gangs als Öffnungszustand der dem alten Teilgetriebe zugeordneten Kupplung gewertet wird.

3. Verfahren nach Anspruch 1 oder 2, wobei die dem alten Teilgetriebe zugeordnete Kupplung nach deren Öffnung bei ausgelegtem Gang im alten Teilgetriebe allmählich geschlossen wird, der Drehzahlverlauf der Eingangswelle des alten Teilgetriebes erfasst wird und die Betätigungsstellung der Kupplung, bei der eine rasche Änderung der Drehzahl erfolgt, als Tastpunkt bestimmt wird.

4. Verfahren nach Anspruch 3, wobei in dem alten Teilgetriebe bei offener zugehöriger Kupplung ein längerer Gang als der im neuen Teilgetriebe eingelegte Gang eingelegt wird und der längere Gang kurzzeitig derart ansynchronisiert wird, dass die Drehzahl der Eingangswelle des alten Teilgetriebes unter die der Antriebswelle sinkt, so dass die Eingangswelle des alten Teilgetriebes zu Beginn des allmählichen Schließens der ihm zugeordneten Kupplung mit einer niedrigeren Drehzahl dreht als die Antriebswelle.

5. Verfahren nach Anspruch 3, wobei vor Beginn des allmählichen Schließens die Drehzahl der Antriebswelle derart erhöht wird, dass sich die Antriebswelle bei Beginn des allmählichen Schließens der dem alten Teilgetriebe zugeordneten Kupplung mit einer höheren Drehzahl dreht als die Eingangswelle des alten Teilgetriebes.

6. Verfahren nach Anspruch 5, wobei die Drehzahl der Antriebswelle während ihrer Erhöhung mit der Eingangswelle des alten Teilgetriebes verglichen wird und eine gleichsinnige Änderung der Drehzahlen als nicht geöffneter Zustand der dem alten Teilgetriebe zugeordneten Kupplung gewertet wird.

7. Verfahren nach einem der Ansprüche 1 bis 6, wobei
die dem alten Getriebe zugeordnete Kupplung bei dem im Neutralgang befindlichen alten Teilgetriebe zumindest teilweise derart geschlossen wird, dass sich die Eingangswelle des alten Teilgetriebes dreht,
die Kupplung geöffnet wird,
die Drehzahl der Eingangswelle erfasst wird,
die Kupplung allmählich geschlossen wird und
diejenige Betätigungsstellung der Kupplung als Tastpunkt bestimmt wird, bei der sich der zeitliche Gradient der Drehzahl der Eingangswelle während des allmählichen Schließens der Kupplung in vorbestimmter Weise ändert.

8. Verfahren nach einem der Ansprüche 3 bis 7, wobei die ermittelte Tastpunktposition zur Plausibilisierung der Kupplungsaktorposition herangezogen wird.

9. Verfahren nach einem der Ansprüche 1 bis 6, wobei die Kupplung bei dem in Neutralgang befindlichen Getriebe zumindest teilweise derart geschlossen wird, dass sich die Eingangswelle dreht,
die Kupplung geöffnet wird,
die Drehzahl der Eingangswelle erfasst und deren Gradient ermittelt wird,
die Kupplung allmählich geschlossen wird und
diejenige Betätigungsstellung der Kupplung als Tastpunkt bestimmt wird, bei sich der zeitliche Gradient der Drehzahl der Eingangswelle während des allmählichen Schließens der Kupplung in vorbestimmter Weise ändert.

10. Vorrichtung zum Steuern des Aktors zum Betätigen einer Kupplung, die zwischen einer von einem Antriebsmotor antreibbaren Antriebswelle und einer Eingangswelle eines Getriebes angeordnet ist, enthaltend
Sensoren zum Erfassen der Drehzahl der Antriebswelle und der Eingangswelle und eine mit den Sensoren verbundene elektronische Steuereinrichtung, **dadurch gekennzeichnet, dass** die Steuereinrichtung den Aktor entsprechend einem Verfahren nach einem der Ansprüche 1 bis 9 steuert.

## Claims

1. Method for determining the plausibility of an activation position of a clutch, activated by an actuator, of a double clutch gearbox, containing the following steps:
- opening of the clutch which is assigned to the old component gearbox which is currently active, and simultaneous closing of the clutch which is assigned to the other component gearbox, in order to switch over from the gear speed engaged in the old component gearbox to a gear speed engaged in the other, new component gearbox,
- disengagement of the gear speed engaged in the old component gearbox while the clutches are still in the overlapping operating mode, or directly afterwards,
- detection of the difference between the rotational speed of a drive shaft, driven in rotation by a drive engine, of the double clutch gearbox and the rotational speed of the input shaft of the old component gearbox, and
- evaluation of the state of the clutch assigned to the old component gearbox as opened if the difference in rotational speed exceeds a predetermined value within a predetermined time period after the disengagement of the gear speed, **characterized in that** the ratio of the rotational speed of the drive shaft of the double clutch gearbox to that of the input shaft of the old component gearbox is detected, and the open state of the clutch assigned to the old component gearbox is inferred from the ratio.

2. Method according to Claim 1, wherein in the case of the closed clutch which is assigned to the new component gearbox a new gear speed is engaged to the old component gearbox and the possibility of engaging the new gear speed is evaluated as an open state of the clutch assigned to the old component gearbox.

3. Method according to Claim 1 or 2, wherein the clutch which is assigned to the old component gearbox is gradually closed after it is opened with the gear speed disengaged in the old component gearbox, the rotational speed profile of the input shaft of the old component gearbox is detected, and the activation position of the clutch at which a rapid change in the rotational speed takes place is determined as a bite point.

4. Method according to Claim 3, wherein when the associated clutch is open in the old component gearbox, a longer gear speed is engaged than the gear speed engaged in the new component gearbox, and the longer gear speed is briefly synchronized in such a way that the rotational speed of the input shaft of the old component gearbox drops below that of the drive shaft, with the result that at the start of the gradual closing of the clutch assigned to the old component gearbox the input shaft of said old component gearbox rotates with a lower rotational speed than the drive shaft.

5. Method according to Claim 3, wherein before the start of the gradual closing the rotational speed of the drive shaft is increased in such a way that at the start of the gradual closing of the clutch assigned to the old component gearbox the drive shaft rotates with a higher rotational speed than the input shaft of the old component gearbox.

6. Method according to Claim 5, wherein the rotational speed of the drive shaft is compared with the input shaft of the old component gearbox while said speed is increased, and a change in the rotational speeds in the same direction is evaluated as a non-opened state of the clutch assigned to the old component gearbox.

7. Method according to one of Claims 1 to 6, wherein the clutch which is assigned to the old gearbox is at least partially closed when the old component gearbox is in the neutral gear speed, in such a way that the input shaft of the old component gearbox rotates,
the clutch is opened,
the rotational speed of the input shaft is detected,
the clutch is gradually closed, and
that activation position of the clutch at which the time gradient of the rotational speed of the input shaft changes in a predetermined way during the gradual closing of the clutch is determined as being the bite point.

8. Method according to one of Claims 3 to 7, wherein the determined bite point position is used for determining the plausibility of the clutch actuator position.

9. Method according to one of Claims 1 to 6, wherein when the gearbox is in the neutral position the clutch is at least partially closed in such a way that the input shaft rotates,
the clutch is opened,
the rotational speed of the input shaft is detected and the gradient thereof is determined, the clutch is gradually closed, and
that activation position of the clutch at which the time gradient of the rotational speed of the input shaft changes in a predetermined way during the gradual closing of the clutch is determined as the bite point.

10. Device for controlling the actuator for activating a clutch which is arranged between a drive shaft, which can be driven by a drive engine, and an input shaft of a transmission, containing sensors for detecting the rotational speed of the drive shaft and the input shaft and an electronic control device which is connected to the sensors, **characterized in that** the control device controls the actuator in accordance with a method according to one of Claims 1 to 9.

## Revendications

1. Procédé pour déterminer la plausibilité d'une position d'actionnement d'un embrayage commandé par un actionneur d'une boîte de vitesses à double embrayage, contenant les étapes suivantes :
- ouverture de l'embrayage associé à la boîte de vitesses partielle ancienne justement active et fermeture simultanée de l'embrayage associé à l'autre boîte de vitesses partielle pour commuter du rapport enclenché dans la boîte de vitesses partielle ancienne à un rapport enclenché dans l'autre boîte de vitesses partielle nouvelle,
- sortie du rapport enclenché dans la boîte de vitesses partielle ancienne encore pendant, ou juste après, le fonctionnement avec recoupement des embrayages,
- détection de la différence entre la vitesse de rotation d'un arbre d'entraînement entraîné en rotation par un moteur d'entraînement de la boîte de vitesses à double embrayage et la vitesse de rotation de l'arbre d'entrée de la boîte de vitesses partielle ancienne, et
- analyse de l'état de l'embrayage associé à la boîte de vitesses partielle ancienne comme étant ouvert lorsque la différence de vitesse de rotation à l'intérieur d'un intervalle de temps prédéterminé après la sortie du rapport dépasse une valeur prédéterminée, **caractérisé en ce que** le rapport de la vitesse de rotation de l'arbre d'entraînement de la boîte de vitesses à double embrayage sur celle de l'arbre d'entrée de la boîte de vitesses partielle ancienne est déterminé et, à partir du rapport, on en conclut l'état d'ouverture de l'embrayage associé à la boîte de vitesses partielle ancienne.

2. Procédé selon la revendication 1, dans lequel, lorsque l'embrayage associé à la boîte de vitesses partielle nouvelle est fermé, un nouveau rapport est enclenché dans la boîte de vitesses partielle ancienne et la capacité d'enclenchement du nouveau rapport est analysée en tant qu'état d'ouverture de l'embrayage associé à la boîte de vitesses partielle ancienne.

3. Procédé selon la revendication 1 ou 2, dans lequel l'embrayage associé à la boîte de vitesses partielle ancienne est fermé progressivement après son ouverture lors de la sortie du rapport dans la boîte de vitesses partielle ancienne, l'allure de la vitesse de rotation de l'arbre d'entrée de la boîte de vitesses partielle ancienne est déterminée et la position d'actionnement de l'embrayage, à laquelle se produit une variation rapide de la vitesse de rotation, est déterminée en tant que point de léchage.

4. Procédé selon la revendication 3, dans lequel, dans la boîte de vitesses partielle ancienne, lorsque l'embrayage associé est ouvert, un rapport plus long que le rapport enclenché dans la boîte de vitesses partielle nouvelle est enclenché et le rapport plus long est synchronisé brièvement de telle sorte que la vitesse de rotation de l'arbre d'entrée de la boîte de vitesses partielle ancienne diminue en dessous de celle de l'arbre d'entraînement, de telle sorte que l'arbre d'entrée de la boîte de vitesse partielle ancienne tourne à une vitesse de rotation inférieure à celle de l'arbre d'entraînement au début de la fermeture progressive de l'embrayage associé à celle-ci.

5. Procédé selon la revendication 3, dans lequel avant le début de la fermeture progressive, la vitesse de rotation de l'arbre d'entraînement est augmentée de telle sorte que l'arbre d'entraînement, au début de la fermeture progressive de l'embrayage associé à la boîte de vitesses partielle ancienne, tourne à une vitesse de rotation plus élevée que celle de l'arbre d'entrée de la boîte de vitesses partielle ancienne.

6. Procédé selon la revendication 5, dans lequel la vitesse de rotation de l'arbre d'entraînement, pendant qu'elle est augmentée, est comparée à celle de l'arbre d'entrée de la boîte de vitesses partielle ancienne et une variation de même sens des vitesses de rotation est analysée comme représentant un état non ouvert de l'embrayage associé à la boîte de vitesses partielle ancienne.

7. Procédé selon l'une quelconque des revendications 1 à 6, dans lequel
l'embrayage associé à la boîte de vitesses ancienne, lorsque la boîte de vitesses partielle ancienne se trouve dans un rapport neutre, est au moins en partie fermé de telle sorte que l'arbre d'entrée de la boîte de vitesses partielle ancienne tourne,
l'embrayage est ouvert,
la vitesse de rotation de l'arbre d'entrée est déterminée,
l'embrayage est fermé progressivement et
la position d'actionnement de l'embrayage, à laquelle le gradient temporel de la vitesse de rotation de l'arbre d'entrée pendant la fermeture progressive de l'embrayage varie de manière prédéterminée, est déterminée comme point de léchage.

8. Procédé selon l'une quelconque des revendications 3 à 7, dans lequel on utilise la position du point de léchage déterminée pour établir la plausibilité de la position de l'actionneur de l'embrayage.

9. Procédé selon l'une quelconque des revendications 1 à 6, dans lequel l'embrayage est au moins en partie fermé lorsque la boîte de vitesses se trouve dans un rapport neutre de telle sorte que l'arbre d'entrée tourne,
l'embrayage est ouvert,
la vitesse de rotation de l'arbre d'entrée est déterminée et son gradient est déterminé, l'embrayage est fermé progressivement et
la position d'actionnement de l'embrayage, à laquelle le gradient temporel de la vitesse de rotation de l'arbre d'entrée varie de manière prédéterminée pendant la fermeture progressive de l'embrayage, est déterminée en tant que point de léchage.

10. Dispositif pour commander l'actionneur en vue d'actionner un embrayage qui est disposé entre un arbre d'entraînement pouvant être entraîné par un moteur d'entraînement et un arbre d'entrée d'une boîte de vitesses, contenant
des capteurs pour détecter la vitesse de rotation de l'arbre d'entraînement et de l'arbre d'entrée et
un dispositif de commande électronique connecté aux capteurs, **caractérisé en ce que** le dispositif de commande commande l'actionneur selon un procédé selon l'une quelconque des revendications 1 à 9.
